# EUROPÄISCHE PATENTSCHRIFT

(11) **EP 1 276 913 B1**
(45) Veröffentlichungstag und Bekanntmachung des Hinweises auf die Patenterteilung: **27.09.2006**
(21) Anmeldenummer: 01925181.8
(22) Anmeldetag: 23.04.2001
(51) Int. Cl.: C21B 13/14, C21B 13/00

(54) **VERFAHREN UND ANLAGE ZUR HERSTELLUNG EINER METALLSCHMELZE**
METHOD AND INSTALLATION FOR PRODUCING A METAL MELT
PROCEDE ET INSTALLATION POUR PRODUIRE DU METAL EN FUSION

(30) Priorität: 28.04.2000 AT 7522000
(43) Veröffentlichungstag der Anmeldung: 22.01.2003
(73) Patentinhaber: Voest-Alpine Industrieanlagenbau GmbH & Co, 4020 Linz (AT); POHANG IRON & STEEL CO., LTD., Pohang City Kyong Sang, Book-Do 790-300 (KR); RESEARCH INSTITUTE OF INDUSTRIAL SCIENCE & TECHNOLOGY, INCORPORATED FOUNDATION, Pohang City, Kyong Sang Book-do 790-330 (KR)
(72) Erfinder: ZIRNGAST, Johann, A-4614 Marchtrenk (AT)
(74) Vertreter: Kopecky, Helmut
(86) Internationale Anmeldenummer: PCT/AT2001/000121
(87) Internationale Veröffentlichungsnummer: WO 2001/083830

(56) Entgegenhaltungen:
- EP-A- 0 012 363
- EP-A- 0 594 557
- US-A- 5 185 032

## Beschreibung

Die Erfindung betrifft ein Verfahren zur Herstellung einer Metallschmelze durch Reduzieren von metalloxidhältigem Material, insbesondere eisenoxidhältigem Material, im Wirbelschichtverfahren in einem Wirbelschichtreaktor und anschließendes Einschmelzen des reduzierten Materials in einem Einschmelzvergaser, in dem aus kohlenstoffhältigem Material ein Reduktionsgas erzeugt wird, das zum Reduzieren des metalloxidhältigen Materials im Wirbelschichtverfahren eingesetzt wird, wobei sowohl das Reduzieren des metalloxidhältigen Materials als auch das Einschmelzen des reduzierten Materials unter Atmosphärenüberdruck erfolgt, sowie eine Anlage zur Durchführung des Verfahrens.

Ein Verfahren dieser Art ist beispielsweise aus der EP-A1 - 0 594 557 und der WO 97/13880 bekannt.

Um eine einfache Förderung des reduzierten Materials in den Einschmelzvergaser zu ermöglichen, wurden bisher die Wirbelschichtreaktoren auf einem Niveau oberhalb eines Einschmelzvergasers angeordnet und das reduzierte Material vom Wirbelschichtreaktor über eine Förderleitung unter Gravitationsausnutzung in den Einschmelzvergaser eingebracht. Bei Anlagen dieser Art mündet die Förderleitung, die vom unteren Endbereich des Wirbelschichtreaktors ausgeht, in den oberen Bereich des Einschmelzvergasers (WO 97/13880), der als domartiger Gasberuhigungsraum ausgebildet ist.

Das Einbringen von reduziertem Material in den Einschmelzvergaser mit Hilfe der Gravitationswirkung ermöglicht zwar eine einfache Einbringung, bedingt jedoch eine große Bauhöhe der Gesamtanlage, zumal die Wirbelschichtreaktoren auf einem Niveau oberhalb des Einschmelzvergasers angeordnet werden müssen. Daraus resultiert nicht nur für die Anlage selbst ein relativ hoher Investitionsaufwand, sondern auch für eine entsprechend gestaltete Fundamentierung. Zudem weist ein Verfahren dieser Art den Nachteil auf, daß für einen Einschmelzvergaser nur eine einzige Reaktorlinie vorgesehen werden kann. Dies ergibt sich aus den engen Platzverhältnissen bei Anordnung einer Reaktorlinie oberhalb des Einschmelzvergasers.

Aus der EP-A1 - 0 594 557 ist es bekannt, reduziertes Material aus einem Wirbelschichtreaktor mit Hilfe von Austragschnecken auszufördern und über Schleusen mit Hilfe eines Stickstoffinjektors in den Einschmelzvergaser einzublasen, u.zw. im Bereich der Einblasebenen für sauerstoffhältige Gase. Die Schleusen dienen dazu, Druckunterschiede zwischen dem Wirbelschichtreaktor und dem Einschmelzvergaser auszugleichen.

Das Einbringen von reduziertem Material in den Einschmelzvergaser mit Hilfe eines Stickstoffinjektors ermöglicht zwar eine Anordnung eines Wirbelschichtreaktors auf einem geringeren Niveau, d.h. nicht unbedingt oberhalb des Einschmelzvergasers, erfordert jedoch eine relativ aufwendige Fördereinrichtung. Zudem weist ein Verfahren dieser Art den Nachteil auf, daß das reduzierte Material nur schwer in den Dom des Einschmelzvergasers einbringbar ist, zumal durch den Stickstoffinjektor größere Geschwindigkeiten des reduzierten Materials am Einbringort in den Einschmelzvergaser verursacht werden, was wiederum der Funktion des Domes - dieser stellt nämlich einen Gasberuhigungsraum dar - zuwiderläuft. Weiters durchwandert das reduzierte Material nicht die gesamte Einschmelzvergasungszone, sondern nur einen Teilbereich derselben.

Die Erfindung stellt sich die Aufgabe, ein Verfahren der eingangs beschriebenen Art dahingehend weiterzuentwickeln, daß zum ersten eine Anordnung von Wirbelschichtreaktoren auf einem Höhenniveau des Einschmelzvergasers und zum zweiten eine einfache Einbringung in den Einschmelzvergaser, insbesondere in dessen Dombereich, möglich ist, wobei weder die im Einschmelzvergaser ablaufenden Prozesse gestört werden, noch ein hoher technischer Aufwand erforderlich sind. Das Einbringen des reduzierten Materials soll unter Ausnutzung der Schwerkraft erfolgen können.

Diese Aufgabe wird erfindungsgemäß für ein Verfahren der eingangs beschriebenen Art dadurch gelöst, daß zwecks Überbringens des reduzierten Materials von mindestens einem Wirbelschichtreaktor in den Einschmelzvergaser in einem oberhalb des Einschmelzvergasers befindlichen Zwischengefäß ein geringerer Druck eingestellt wird als im Wirbelschichtreaktor und das reduzierte Material vom Wirbelschichtreaktor unter Entspannung in das Zwischengefäß aufwärts strömen gelassen und vom Zwischengefäß über ein Schleusensystem unter Druckbeaufschlagung in den Einschmelzvergaser geleitet wird.

Gemäß einer bevorzugten Ausführungsform wird das Zwischengefäß kontinuierlich mit reduziertem Material gefüllt und zum Abbau des Überdrucks etwa auf Atmosphärendruck kontinuierlich entlüftet.

Eine bevorzugte Verfahrensvariante ist dadurch gekennzeichnet, daß das im Zwischengefäß befindliche reduzierte Material mittels Schwerkraftförderung aus dem Zwischengefäß in einen zunächst etwa Umgebungsdruck aufweisenden Bunker geleitet wird, daß nach dessen Auffüllen mit reduziertem Material das Zwischengefäß vom Bunker leitungsmäßig getrennt wird, worauf der Bunker mindestens auf den im Einschmelzvergaser herrschenden Überdruck gesetzt wird und das reduzierte Material aus dem Bunker in den Einschmelzvergaser unter Schwerkraftwirkung eingebracht wird. Hierdurch gelingt es, das reduzierte Material ohne Turbulenzen in den Einschmelzvergaser, vorzugsweise in dessen Dombereich, der als Gasberuhigungsraum ausgebildet ist, einzubringen.

Eine zweckmäßige Variante ist dadurch gekennzeichnet, daß zum Einbringen des reduzierten Materials vom Bunker in den Einschmelzvergaser eine Schleuse verwendet wird, vorzugsweise in Form eines Zellenrades.

Eine weitere vorteilhafte Variante ist dadurch gekennzeichnet, daß im Zwischengefäß befindliches reduziertes Material mittels Schwerkraftförderung aus dem Zwischengefäß alternierend in einen von mindestens zwei zunächst etwa Umgebungsdruck aufweisenden Bunkern geleitet wird, daß nach Auffüllen eines der beiden Bunker das Zwischengefäß vom aufgefüllten Bunker leitungsmäßig getrennt wird, worauf der gefüllte Bunker mindestens auf den im Einschmelzvergaser herrschenden Überdruck gesetzt wird und das reduzierte Material aus dem aufgefüllten Bunker in den Einschmelzvergaser unter Schwerkraftwirkung eingebracht wird, und daß während des Einbringens des reduzierten Materials in den Einschmelzvergaser der andere Bunker mit reduziertem Material gefüllt wird.

Bevorzugt wird im Einschmelzvergaser ein Atmosphärenüberdruck von 3 bis 8 bar, vorzugsweise von 3 bis 4 bar, aufrecht erhalten.

Eine Anlage zum Herstellen einer Metallschmelze unter Verwendung des erfindungsgemäßen Verfahrens mit einem für Atmosphärenüberdruck ausgelegten Einschmelzvergaser, mindestens einem für Atmosphärenüberdruck ausgelegten Wirbelschichtreaktor, einer Fördereinrichtung zwischen dem Wirbelschichtreaktor und dem Einschmelzvergaser zur Förderung von reduziertem Material aus dem Wirbelschichtreaktor in den Einschmelzvergaser und mindestens einer Gasverbindungsleitung zwischen dem Einschmelzvergaser und dem Wirbelschichtreaktor zum Einleiten von im Einschmelzvergaser gebildetem Reduktionsgas in den Wirbelschichtreaktor ist dadurch gekennzeichnet, daß der Wirbelschichtreaktor auf etwa dem Höhenniveau des Einschmelzvergasers angeordnet ist, daß die Fördereinrichtung eine Rohrleitung umfaßt, die ausgehend vom Wirbelschichtreaktor bis über den Einschmelzvergaser ragt, daß diese Rohrleitung in ein Zwischengefäß mit einer Entlüftungseinrichtung mündet, und daß zwischen dem Zwischengefäß und einer im Dom des Einschmelzvergasers zum Einbringen reduzierten Materials vorgesehenen Einfüllöffnung ein Schleusensystem mit einem Mittel zur Druckbeaufschlagung vorgesehen ist.

Hierbei ist zweckmäßig das Schleusensystem von einem Bunker und einer gasdichten Austrageinrichtung zwischen dem Bunker und dem Einschmelzvergaser gebildet, wobei vorteilhaft die Austrageinrichtung von einer Zellenradeinrichtung gebildet ist.

Um eine Entlüftung des Zwischengefäßes und einen Druckausgleich des Bunkers mit dem Einschmelzvergaser zu ermöglichen, ist vorzugsweise leitungsmäßig zwischen dem Zwischengefäß und dem Bunker ein Absperrorgan vorgesehen.

Eine vorteilhafte Ausführungsform ist dadurch gekennzeichnet, daß in den Bunker eine Gasleitung zwecks Erzeugung eines Überdrucks innerhalb des Bunkers einmündet, die an eine Reduktionsgasquelle oder an eine Inertgasquelle angeschlossen ist.

Zwecks kontinuierlichen Chargierens reduzierten Materials sind vorteilhaft dem Zwischengefäß mindestens zwei Bunker in Parallelanordnung nachgeschaltet, die über jeweils zwei Verbindungsleitungen, die jeweils mit Absperrorganen versehen sind, leitungsmäßig mit dem Zwischengefäß verbindbar sind.

Zweckmäßig ist die Rohrleitung mit einem Absperrorgan versehen, vorzugsweise knapp benachbart beim Wirbelschichtreaktor.

Die Erfindung ermöglicht die Anordnung mehrerer Reaktorlinien, die in einen einzigen Einschmelzvergaser münden, wobei vorteilhaft zwei oder mehr Wirbelschichtreaktoren niveaumäßig neben dem Einschmelzvergaser angeordnet sind und jeder der Wirbelschichtreaktoren über eine eigene Fördereinrichtung mit dem Einschmelzvergaser leitungsmäßig in Verbindung steht.

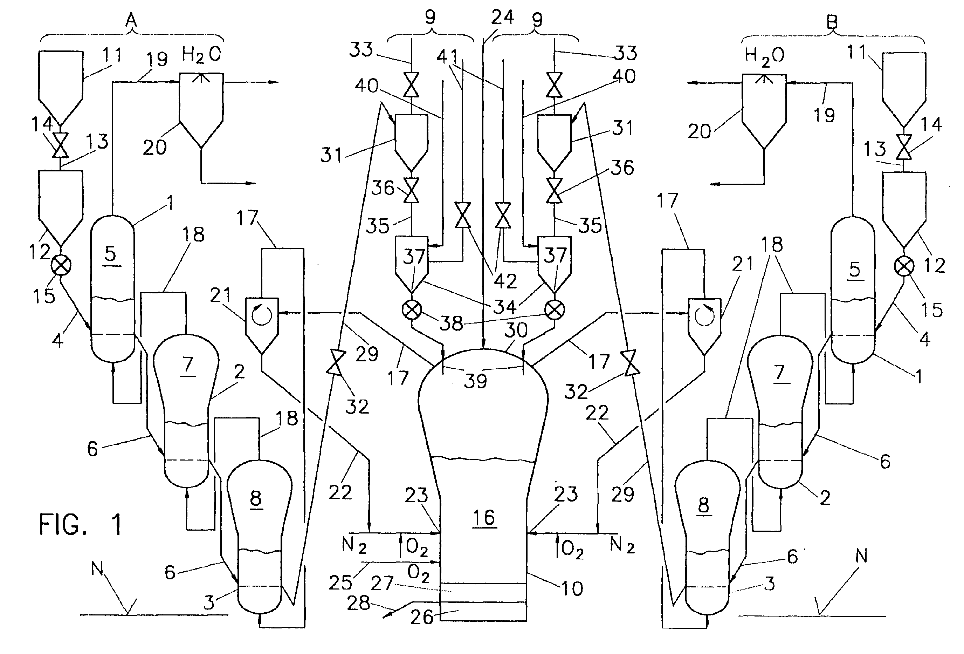

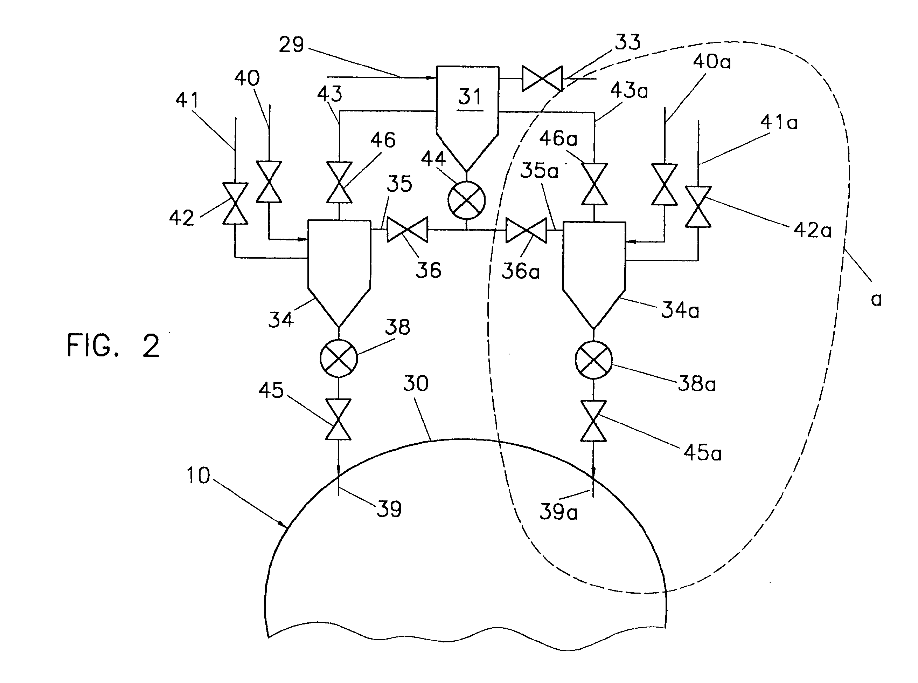

Die Erfindung ist nachstehend anhand zweier in der Zeichnung schematisch dargestellter Ausführungsbeispiele näher erläutert, wobei Fig. 1 eine Gesamtdarstellung einer erfindungsgemäßen Anlage nach einer ersten Ausführungsform und Fig. 2 ein Detail einer Anlage nach einer zweiten Ausführungsform zeigt.

Die erfindungsgemäße Anlage weist zwei Reaktorlinien A und B auf, wobei jede Reaktorlinie A, B von drei in Serie hintereinander geschalteten für Atmosphärenüberdruck konzipierten Wirbelschichtreaktoren 1, 2, 3 (es können auch zwei oder vier Wirbelschichtreaktoren sein) gebildet ist. Eisenoxidhältiges Material, wie Feinerz, wird in jede der Reaktorlinien A, B über jeweils eine Erzzuleitung 4 dem jeweils ersten Wirbelschichtreaktor 1, in dem in einer Vorwärmstufe 5 eine Vorerwärmung des Feinerzes und eventuell eine Vorreduktion stattfindet, zugeleitet und anschließend von Wirbelschichtreaktor 1 zu Wirbelschichtreaktor 2, 3 über Förderleitungen 6 geleitet. In dem Wirbelschichtreaktor 2 erfolgt in einer Vor-Reduktionsstufe 7 eine Vorreduktion und im nachfolgenden Wirbelschichtreaktor 3 in einer End-Reduktionsstufe 8 eine Endreduktion des Feinerzes zu Eisenschwamm.

Das fertig reduzierte Material, also der Eisenschwamm, wird vom in Flußrichtung des Feinerzes letztangeordneten Wirbelschichtreaktor 3 jeder der Reaktorlinien A, B über eine Fördereinrichtung 9, die nachstehend erläutert ist, in einen ebenfalls für Atmosphärenüberdruck konzipierten Einschmelzvergaser 10 eingebracht. Der Einschmelzvergaser 10 und der in Fließrichtung des Feinerzes letztangeordnete Wirbelschichtreaktor sind auf etwa demselben Höhenniveau N angeordnet.

Sowohl der Einschmelzvergaser 10 als auch die Wirbelschichtreaktoren 1 bis 3 werden mit Atmosphärenüberdruck zwischen 3 bis 8 bar, vorzugsweise zwischen 3 und 4 bar, betrieben. Zur Einbringung des Feinerzes in den in Fließrichtung erstangeordneten Wirbelschichtreaktor 1 sind daher bei jeder Reaktorlinie A, B jeweils zwei übereinander angeordnete Bunker 11, 12 vorgesehen, wobei das Feinerz zunächst in den oberen ersten Bunker 11 eingebracht wird und von dort über eine Rohrleitung 13, die mit einem Absperrorgan 14 versehen ist, in den unterhalb angeordneten zweiten Bunker 12 strömt, sobald dieses Absperrorgan 14 geöffnet ist. Sodann wird das Absperrorgan 14 geschlossen und der untere Bunker 12 unter Druck gesetzt. Anschließend kann über eine am unteren Ende des unteren Bunkers 12 angeordnete Schleuse 15, wie z.B. eine Zellenradschleuse, das Feinerz in den in Fließrichtung des Feinerzes erstangeordneten Wirbelschichtreaktor 1 eingebracht werden.

Im Einschmelzvergaser 10 wird in einer Einschmelzvergasungszone 16 aus Kohle und sauerstoffhältigem Gas ein CO- und H₂-hältiges Reduktionsgas erzeugt, das in jede der Reaktorlinien A, B über jeweils eine Reduktionsgaszuleitung 17 in den in Fließrichtung des Feinerzes letztangeordneten Wirbelschichtreaktor 3 eingeleitet wird. Das Reduktionsgas wird dann im Gegenstrom zum Erzdurchfluß von Wirbelschichtreaktor 3 zu Wirbelschichtreaktor 2 und 1 geführt, u.zw. über Verbindungsleitungen 18 und aus dem in Fließrichtung des Feinerzes ersten Wirbelschichtreaktor 1 als Topgas über eine Topgasableitung 19 abgeleitet sowie in einem Naßwäscher 20 gekühlt und gewaschen. Das Topgas kann anschließend entweder rezirkuliert werden oder als Exportgas anderweitig Verwendung finden.

In jeder der Reduktionsgaszuleitungen 17, die vom Einschmelzvergaser 10 ausgehen und in den jeweils in Fließrichtung des Feinerzes letztangeordneten Wirbelschichtreaktor 3 münden, ist eine Entstaubungseinrichtung 21, wie ein Heißgaszyklon, vorgesehen, wobei die in diesem Zyklon abgeschiedenen Staubteile dem Einschmelzvergaser 10 über eine Rückleitung 22 mit Stickstoff als Fördermittel und über einen Brenner 23 unter Einblasen von Sauerstoff zugeführt werden.

Der Einschmelzvergaser 10 weist eine Zuführung 24 für feste Kohlenstoffträger und eine Zuführung 25 für sauerstoffhältige Gase sowie gegebenenfalls Zuführungen für bei Raumtemperatur flüssige oder gasförmige Kohlenstoffträger, wie Kohlenwasserstoffe, sowie für gebrannte Zuschläge auf. In dem Einschmelzvergaser 10 sammeln sich unterhalb der Einschmelzvergasungszone 16 schmelzflüssiges Roheisen 26 bzw. schmelzflüssiges Stahlvormaterial und schmelzflüssige Schlacke 27, die über einen Abstich 28 abgestochen werden.

Vorteilhaft wird der Einschmelzvergaser 10 mit einem Atmosphärenüberdruck zwischen 3 und 4 bar betrieben, wogegen die Wirbelschichtreaktoren 1 bis 3 aufgrund von in der Zuleitung für das Reduktionsgas herrschenden Verlusten mit einem Atmosphärenüberdruck zwischen 2 und 4 bar betrieben werden, wobei der Druck im in Fließrichtung des Feinerzes letztangeordneten Wirbelschichtreaktor 3 um etwa ein halbes bar geringer ist als im Einschmelzvergaser 10 und ein weiterer Druckabfall bis zum erstangeordneten Wirbelschichtreaktor 1 jeweils um etwa ein halbes bar je Wirbelschichtstufe vorhanden ist.

### Jede der Fördereinrichtungen 9 ist wie folgt aufgebaut:

Vom in Fließrichtung des Feinerzes letztangeordneten Wirbelschichtreaktor 3, der auf einem Höhenniveau N etwa des Einschmelzvergasers 10 angeordnet ist, führt eine Rohrleitung 29 bis oberhalb des Domes 30 des Einschmelzvergasers 10 und mündet in ein oberhalb des Domes 30 angeordnetes Zwischengefäß 31. In der Rohrleitung 29 befindet sich ein Absperrorgan 32, vorzugsweise nahe beim Wirbelschichtreaktor 3. Dieses Zwischengefäß 31 ist mit einer Entlüftungseinrichtung 33 zum Abbau eines Atmosphärenüberdruckes ausgestattet. Unterhalb des Zwischengefäßes 31 ist ein Bunker 34 vorgesehen, der mit dem Zwischengefäß 31 mit einer Rohrleitung 35 leitungsmäßig verbunden ist. Diese Rohrleitung 35 ist mit einem Absperrorgan 36 ausgestattet.

Der Bunker 34 ist ebenfalls oberhalb des Doms 30 des Einschmelzvergasers 10 vorgesehen. An seinem unteren Ende ist eine Austrittsöffnung 37 angeordnet, die über eine Schleuse 38, wie eine Zellenradschleuse, mit einer im Bereich des Domes 30 in den Einschmelzvergaser 10 einmündenden Rohrleitung 39 verbunden ist.

### Die Funktion der Fördereinrichtung 9 ist folgende:

Wenn reduziertes Material in den Einschmelzvergaser 10 eingebracht werden soll, wird vorerst das Ventil 32 intermittierend geöffnet. Im geöffneten Zustand strömt infolge des Überdrucks im in Fließrichtung letztangeordneten Wirbelschichtreaktor 3 durch Entspannung gegen den Umgebungsdruck und mit Hilfe der dabei frei werdenden Energie reduziertes Material mit Reduktionsgas in das Zwischengefäß 31, das unter Umgebungsdruck oder allenfalls unter minimalem Überdruck steht. Das mit dem reduzierten Material mitströmende Reduktionsgas wird über die Leitung 33 und über einen nicht näher dargestellten Wäscher aus dem Zwischengefäß 31 ständig abgeleitet. Das Absperrorgan 36 der Rohrleitung 35 ist zunächst geschlossen. Nach Füllen des Zwischengefäßes 31 wird das Absperrorgan 36 zwischen dem Zwischengefäß 31 und dem Bunker 34 geöffnet, wodurch das reduzierte Material unter Schwerkrafteinwirkung aus dem Zwischengefäß 31 in den Bunker 34 fließt.

Nach dem Übertritt des reduzierten Materials in den Bunker 34 wird das zwischen dem Zwischengefäß 31 und dem Bunker 34 vorgesehene Absperrorgan 36 geschlossen und der Bunker 34 auf mindestens den Druck des Einschmelzvergasers 10 gebracht. Dies kann entweder mit Hilfe des im Einschmelzvergaser 10 erzeugten Reduktionsgases oder mit Hilfe eines separat zugeführten Inertgases geschehen. Eine Zuleitung in den Bunker für Reduktionsgas und/oder beispielsweise Stickstoff ist mit 40 bezeichnet.

Nach Unterdrucksetzung des Bunkers 34 kann das reduzierte Material aus dem Bunker 34 in den Einschmelzvergaser 10 eingebracht werden, u.zw. mit Hilfe der Schleuse 38, im dargestellten Ausführungsbeispiel mit Hilfe einer Zellenradschleuse 38. Das reduzierte Material gelangt somit mit Hilfe der Schwerkraftwirkung vom Bunker 34 in den Bereich des Domes 30 des Einschmelzvergasers 10. Durch das erfindungsgemäße Schleusensystem 34, 38 gelangt das reduzierte Material in einem dichten Materialstrahl in den Einschmelzvergaser 10, so daß nur ein geringer Materialaustrag mit dem den Einschmelzvergaser 10 verlassenden Reduktionsgasstrom verbunden ist.

Nachdem das reduzierte Material aus dem Bunker 34 in den Einschmelzvergaser 10 eingebracht ist, wird der Bunker 34 über die Leitung 41 mittels eines Ventiles 42 entspannt, und er steht zur abermaligen Füllung für reduziertes Material, das vom zwischenzeitlich entspannten und abermals mit reduziertem Material gefüllten Zwischengefäß 31 wiederum in den Bunker 34 gebracht werden kann, zur Verfügung.

Die Erfindung beschränkt sich nicht auf das in der Zeichnung dargestellte Ausführungsbeispiel, sondern kann in verschiedener Hinsicht modifiziert werden. Beispielsweise ist es auch möglich, das reduzierte Material in kontinuierlichem Stofffluß in den Einschmelzvergaser 10 zu leiten. Um dies zu erzielen, ist die Fördereinrichtung 9 wie in Fig. 2 dargestellt gestaltet.

Gemäß dieser Ausführungsform sind einem einzelnen Zwischengefäß 31 zwei Bunker 34 zugeordnet, die über Verbindungsleitungen 35 und 43 mit diesem Zwischengefäß 31 leitungsmäßig verbunden sind. In den Leitungen 35 sind Absperrventile 36 sowie eine Zellenradschleuse 44 vorgesehen; in den Verbindungsleitungen 43 sind ebenfalls Absperrventile 46 angeordnet. Die von den Bunkern 34 jeweils ausgehenden und in den Einschmelzvergaser 10 mündenden Rohrleitungen 39 sind zusätzlich mit Absperrventilen 45 ausgestattet.

Die Funktion ist nachfolgend für die in Fig. 2 in der rechten Hälfte dargestellte Linie "a" beschrieben, wobei die hier vorgesehenen Bauteile zusätzlich zu den oben angegebenen Bezugszeichen ebenfalls mit dem Index "a" versehen sind.

Wird der Einschmelzvergaser 10 über die Linie a befüllt, so wird zunächst das Absperrventil 45a gasdicht geschlossen und der Bunker 34a über die Leitung 41a - durch Öffnen des Ventiles 42a - entspannt. Weiters wird ein Druckausgleich über die Leitung 43a durch Öffnen des Ventiles 46a durchgeführt. Nach Öffnen des Absperrventiles 36a wird vom zwischenzeitlich mit reduziertem Material gefüllten Zwischengefäß 31 reduziertes Material über die Zellenradschleuse 44 und die Leitung 35a in den Bunker 34a chargiert.

Anschließend werden die Absperrventile 36a und 46a geschlossen, und es wird über die Leitung 40a Reduktionsgas oder Inertgas in den Bunker 34a eingeleitet, bis dieser mindestens auf einen Druck gebracht ist, der dem Druck im Einschmelzvergaser 10 entspricht. Anschließend kann das Chargieren des reduzierten Materials aus dem Bunker 34a über die Zellenradschleuse 38a und das Absperrventil 45a in den Einschmelzvergaser 10 erfolgen. Während dieses Chargierens wird der zweite Bunker 34 in gleicher Weise gefüllt, wie zuvor für den Bunker 34a beschrieben, so daß nach Entleeren des Bunkers 34a reduziertes Material aus dem zweiten Bunker 34 in den Einschmelzvergaser 10 gefördert werden kann. Auf diese Weise gelingt es, den Einschmelzvergaser 10 kontinuierlich mit reduziertem Material zu versorgen, und zwar alternierend einmal aus dem Bunker 34 und einmal aus dem Bunker 34a.

In der Zeichnung sind zwei Reaktorlinien A, B veranschaulicht; es könnten jedoch auch mehr Reaktorlinien verwirklicht werden. Die Anordnung von zwei oder mehr Reaktorlinien für einen einzigen Einschmelzvergaser 10 führt nicht nur zu höheren Leistungen, sondern ermöglicht zusätzlich eine bessere Reduktionsgasausnützung.

## Patentansprüche

1. Verfahren zur Herstellung einer Metallschmelze durch Reduzieren von metalloxidhältigem Material, insbesondere eisenoxidhältigem Material, im Wirbelschichtverfahren in einem Wirbelschichtreaktor (1, 2, 3) und anschließendes Einschmelzen des reduzierten Materials in einem Einschmelzvergaser (10), in dem aus kohlenstoffhältigem Material ein Reduktionsgas erzeugt wird, das zum Reduzieren des metalloxidhältigen Materials im Wirbelschichtverfahren eingesetzt wird, wobei sowohl das Reduzieren des metalloxidhältigen Materials als auch das Einschmelzen des reduzierten Materials unter Atmosphärenüberdruck erfolgt, **dadurch gekennzeichnet, daß** zwecks Überbringens des reduzierten Materials von mindestens einem Wirbelschichtreaktor (3) in den Einschmelzvergaser (10) in einem oberhalb des Einschmelzvergasers (10) befindlichen Zwischengefäß (31) ein geringerer Druck eingestellt wird als im Wirbelschichtreaktor (3) und das reduzierte Material vom Wirbelschichtreaktor (3) unter Entspannung in das Zwischengefäß (31) aufwärts strömen gelassen und vom Zwischengefäß (31) über ein Schleusensystem (34, 38) unter Druckbeaufschlagung in den Einschmelzvergaser (10) geleitet wird.

2. Verfahren nach Anspruch 1, **dadurch gekennzeichnet, daß** das Zwischengefäß (31) kontinuierlich mit reduziertem Material gefüllt wird und zum Abbau des Überdrucks etwa auf Atmosphärendruck kontinuierlich entlüftet wird.

3. Verfahren nach Anspruch 1 oder 2, **dadurch gekennzeichnet, daß** das im Zwischengefäß (31) befindliche reduzierte Material mittels Schwerkraftförderung aus dem Zwischengefäß (31) in einen zunächst etwa Umgebungsdruck aufweisenden Bunker (34) geleitet wird, daß nach dessen Auffüllen mit reduziertem Material das Zwischengefäß (31) vom Bunker (34) leitungsmäßig getrennt wird, worauf der Bunker (34) mindestens auf den im Einschmelzvergaser (10) herrschenden Überdruck gesetzt wird und das reduzierte Material aus dem Bunker (34) in den Einschmelzvergaser (10) unter Schwerkraftwirkung eingebracht wird.

4. Verfahren nach Anspruch 3, **dadurch gekennzeichnet, daß** zum Einbringen des reduzierten Materials vom Bunker (34) in den Einschmelzvergaser (10) eine Schleuse (38) verwendet wird, vorzugsweise in Form eines Zellenrades.

5. Verfahren nach Anspruch 3 oder 4, **dadurch gekennzeichnet, daß** im Zwischengefäß (31) befindliches reduziertes Material mittels Schwerkraftförderung aus dem Zwischengefäß (31) alternierend in einen von mindestens zwei zunächst etwa Umgebungsdruck aufweisenden Bunkern (34, 34a) geleitet wird, daß nach Auffüllen eines der beiden Bunker (34 oder 34a) das Zwischengefäß (31) vom aufgefüllten Bunker (34 oder 34a) leitungsmäßig getrennt wird, worauf der gefüllte Bunker (34 oder 34a) mindestens auf den im Einschmelzvergaser (10) herrschenden Überdruck gesetzt wird und das reduzierte Material aus dem aufgefüllten Bunker (34 oder 34a) in den Einschmelzvergaser (10) unter Schwerlaaftwirkung eingebracht wird, und daß während des Einbringens des reduzierten Materials in den Einschmelzvergaser (10) der andere Bunker (34 oder 34a) mit reduziertem Material gefüllt wird.

6. Verfahren nach einem oder mehreren der Ansprüche 1 bis 5, **dadurch gekennzeichnet, daß** im Einschmelzvergaser (10) ein Atmosphärenüberdruck von 3 bis 8 bar, vorzugsweise von 3 bis 4 bar, aufrecht erhalten wird.

7. Anlage zum Herstellen einer Metallschmelze unter Verwendung eines Verfahrens nach einem oder mehreren der Ansprüche 1 bis 6 mit einem für Atmosphärenüberdruck ausgelegten Einschmelzvergaser (10), mindestens einem für Atmosphärenüberdruck ausgelegten Wirbelschichtreaktor (1 bis 3), einer Fördereinrichtung (9) zwischen dem Wirbelschichtreaktor (3) und dem Einschmelzvergaser (10) zur Förderung von reduziertem Material aus dem Wirbelschichtreaktor (3) in den Einschmelzvergaser (10) und mindestens einer Gasverbindungsleitung (17) zwischen dem Einschmelzvergaser (10) und dem Wirbelschichtreaktor (3) zum Einleiten von im Einschmelzvergaser (10) gebildetem Reduktionsgas in den Wirbelschichtreaktor (3), **dadurch gekennzeichnet, daß** der Wirbelschichtreaktor (3) auf etwa dem Höhenniveau (N) des Einschmelzvergasers (10) angeordnet ist, daß die Fördereinrichtung (9) eine Rohrleitung (29) umfaßt, die ausgehend vom Wirbelschichtreaktor (3) bis über den Einschmelzvergaser (10) ragt, daß diese Rohrleitung (29) in ein Zwischengefäß (31) mit einer Entlüftungseinrichtung (33) mündet, und daß zwischen dem Zwischengefäß (31) und einer im Dom (30) des Einschmelzvergasers (10) zum Einbringen reduzierten Materials vorgesehenen Einfüllöffnung ein Schleusensystem (34, 38) mit einem Mittel zur Druckbeaufschlagung (40) vorgesehen ist.

8. Anlage nach Anspruch 7, **dadurch gekennzeichnet, daß** das Schleusensystem von einem Bunker (34) und einer gasdichten Austrageinrichtung (38) zwischen dem Bunker (34) und dem Einschmelzvergaser (10) gebildet ist.

9. Anlage nach Anspruch 8, **dadurch gekennzeichnet, daß** die Austrageinrichtung von einer Zellenradeinrichrung (38) gebildet ist.

10. Anlage nach einem oder mehreren der Ansprüche 7 bis 9, **dadurch gekennzeichnet, daß** leitungsmäßig zwischen dem Zwischengefäß (31) und dem Bunker (34) ein Absperrorgan (35) vorgesehen ist.

11. Anlage nach einem oder mehreren der Ansprüche 8 bis 10, **dadurch gekennzeichnet, daß** in den Bunker (34) eine Gasleitung (40) zwecks Erzeugung eines Überdrucks innerhalb des Bunkers (34) einmündet, die an eine Reduktionsgasquelle oder an eine Inertgasquelle angeschlossen ist.

12. Anlage nach einem oder mehreren der Ansprüche 8 bis 11, **dadurch gekennzeichnet, daß** dem Zwischengefäß (31) mindestens zwei Bunker (34, 34a) in Parallelanordnung nachgeschaltet sind, die über jeweils zwei Verbindungsleitungen (35 und 43), die jeweils mit Absperrorganen (36 und 46) versehen sind, leitungsmäßig mit dem Zwischengefäß (31) verbindbar sind.

13. Anlage nach einem oder mehreren der Ansprüche 7 bis 12, **dadurch gekennzeichnet, daß** die Rohrleitung (29) mit einem Absperrorgan (32) versehen ist, vorzugsweise knapp benachbart beim Wirbelschichtreaktor (3).

14. Anlage nach einem oder mehreren der Ansprüche 7 bis 13, **dadurch gekennzeichnet, daß** zwei oder mehr Wirbelschichtreaktoren (3) neben dem Einschmelzvergaser (10) auf dessen Höhenniveau (N) angeordnet sind und jeder der Wirbelschichtreaktoren (3) über eine eigene Fördereinrichtung (9) mit dem Einschmelzvergaser (10) leitungsmäßig in Verbindung steht.

## Claims

1. A process for producing a metal melt by reducing metal-oxide-containing material, in particular iron-oxide-containing material, in a fluidized-bed reactor (1, 2, 3) by the fluidized-bed method and by subsequently melting down the reduced material in a melt-down gasifier (10), in which there is generated from carbon-containing material a reducing gas which is used for reducing the metal-oxide-containing material by the fluidized-bed method, wherein both the reducing of the metal-oxide-containing material and the melting-down of the reduced material are effected under atmospheric excess pressure, **characterized in that** for the purpose of transferring the reduced material from at least one fluidized-bed reactor (3) into the melt-down gasifier (10) a lower pressure is set in an intermediate vessel (31) situated above the melt-down gasifier (10) than in the fluidized-bed reactor (3) and the reduced material is allowed to flow, under relaxation, upwards from the fluidized-bed reactor (3) into the intermediate vessel (31) and conducted from the intermediate vessel (31) via a sluice system (34, 38) into the melt-down gasifier (10) while being pressurized.

2. A process according to claim 1, **characterized in that** the intermediate vessel (31) is continuously filled with reduced material and continuously deaerated for reducing the excess pressure to roughly atmospheric pressure.

3. A process according to claim 1 or 2, **characterized in that** the reduced material located in the intermediate vessel (31) is conducted, by gravitational conveyance, from the intermediate vessel (31) into a bunker (34) having approximately ambient pressure first, that after the bunker has been filled up with reduced material the intermediate vessel (31) is flow-separated from the bunker (34), whereupon the bunker (34) is set at least at the excess pressure prevailing in the melt-down gasifier (10) and the reduced material from the bunker (34) is charged into the melt-down gasifier (10) by gravitational force.

4. A process according to claim 3, **characterized in that** a sluice (38), preferably in the form of a cellular wheel, is used for charging the reduced material from the bunker (34) into the melt-down gasifier (10).

5. A process according to claim 3 or 4, **characterized in that** reduced material located in the intermediate vessel (31) is conducted, by gravitational conveyance, from the intermediate vessel (31) alternately into one of at least two bunkers (34, 34a) having approximately ambient pressure first, that after one of the two bunkers (34 or 34a) has been filled up the intermediate vessel (31) is flow-separated from the filled-up bunker (34 or 34a), whereupon the filled-up bunker (34 or 34a) is set at least at the excess pressure prevailing in the melt-down gasifier (10) and the reduced material from the filled-up bunker (34 or 34a) is charged into the melt-down gasifier (10) by gravitational force, and that during charging the reduced material into the melt-down gasifier (10) the other bunker (34 or 34a) is filled with reduced material.

6. A process according to one or several of claims 1 to 5, **characterized in that** an atmospheric excess pressure of 3 to 8 bars, preferably of 3 to 4 bars, is maintained in the melt-down gasifier (10).

7. A plant for producing a metal melt while using a process according to one or several of claims 1 to 6, comprising a melt-down gasifier (10) designed for atmospheric excess pressure, at least one fluidized-bed reactor (1 to 3) designed for atmospheric excess pressure, a conveying means (9) between the fluidized-bed reactor (3) and the melt-down gasifier (10) for conveying reduced material from the fluidized-bed reactor (3) into the melt-down gasifier (10), and at least one gas connection duct (17) between the melt-down gasifier (10) and the fluidized-bed reactor (3) for introducing reducing gas formed in the melt-down gasifier (10) into the fluidized-bed reactor (3), **characterized in that** the fluidized-bed reactor (3) is arranged at roughly the height level (N) of the melt-down gasifier (10), that the conveying means (9) comprises a pipe (29) which, departing from the fluidized-bed reactor (3), projects beyond the melt-down gasifier (10), that this pipe (29) runs into an intermediate vessel (31) having a deaerator (33), and that between the intermediate vessel (31) and a fill hole provided in the dome (30) of the melt-down gasifier (10) for charging reduced material a sluice system (34, 38) comprising a means for pressurization (40) is provided.

8. A plant according to claim 7, **characterized in that** the sluice system is constituted by a bunker (34) and a gastight discharge means (38) between the bunker (34) and the melt-down gasifier (10).

9. A plant according to claim 8, **characterized in that** the discharge means is constituted by a cellular-wheel means (38).

10. A plant according to one or several of claims 7 to 9, **characterized in that** with regard to the flow a shut-off device (35) is provided between the intermediate vessel (31) and the bunker (34).

11. A plant according to one or several of claims 8 to 10, **characterized in that** a gas duct (40) runs into the bunker (34) to generate an excess pressure within the bunker (34), which gas duct is connected to a reducing-gas source or to an inert-gas source.

12. A plant according to one or several of claims 8 to 11, **characterized in that** the intermediate vessel (31) is followed by at least two bunkers (34, 34a) in parallel arrangement which may be flow-connected with the intermediate vessel (31) via two connection ducts (35 and 43), respectively, provided with shut-off devices (36 and 46), respectively.

13. A plant according to one or several of claims 7 to 12, **characterized in that** the pipe (29) is provided with a shut-off device (32), preferably closely adjacent to the fluidized-bed reactor (3).

14. A plant according to one or several of claims 7 to 13, **characterized in that** two or more fluidized-bed reactors (3) are arranged next to the melt-down gasifier (10) at its height level (N) and each of the fluidized-bed reactors (3) is flow-connected with the melt-down gasifier (10) via an individual conveying means (9).

## Revendications

1. Procédé pour la fabrication d'un métal en fusion par la réduction de matière contenant de l'oxyde métallique, en particulier de matière contenant de l'oxyde de fer, dans le procédé à lit fluidisé dans un réacteur à combustible fluidisé (1, 2, 3), et la fusion subséquente de la matière réduite dans un gazéificateur de fusion (10), dans lequel un gaz de réduction est produit à partir d'une matière contenant du carbone, lequel est utilisé dans le procédé à lit fluidisé en vue de la réduction de la matière contenant de l'oxyde métallique, la réduction de la matière contenant de l'oxyde métallique ainsi que la fusion de la matière réduite étant réalisées avec une surpression atmosphérique, **caractérisé en ce qu'**en vue du transfert de la matière réduite depuis au moins un réacteur à combustion fluidisé (3) dans un gazéificateur de fusion (10), une pression moins élevée que dans le réacteur à combustible fluidisé (3) est ajustée dans un réservoir intermédiaire (31) situé au-dessus du gazéificateur de fusion (10) et que la matière réduite du réacteur à combustible fluidisé (3) peut s'écouler vers le haut par une détente dans le réservoir intermédiaire (31) et peut être amenée depuis le réservoir intermédiaire (31), par le biais d'un système de sas (34, 38), par pressurisation dans le gazéificateur de fusion (10).

2. Procédé selon la revendication 1, **caractérisé en ce que** le réservoir intermédiaire (31) est rempli de matière réduite de manière continue, et est aéré de manière continue à la pression atmosphérique afin de diminuer la surpression.

3. Procédé selon la revendication 1 ou 2, **caractérisé en ce que** le matière réduite située dans le réservoir intermédiaire (31) est amenée, à l'aide d'un transport par gravité, depuis le réservoir intermédiaire (31) dans un réservoir (34) présentant, en premier lieu, une pression ambiante, **en ce qu'**après le remplissage de celui-ci avec la matière réduite, le réservoir intermédiaire (31) est séparé du réservoir (34) au moyen d'une conduite, le réservoir (34) étant réglé au moins sur la surpression régnant dans la gazéificateur de fusion (10) et la matière réduite du réservoir (34) étant introduite dans la gazéificateur de fusion (10) sous l'effet de la gravité.

4. Procédé selon la revendication 3, **caractérisé en ce qu'**un sas (38), de préférence de la forme d'un alimentateur à roue cellulaire, est utilisé vue de l'introduction de la matière réduite du réservoir (34) dans le gazéificateur de fusion (10).

5. Procédé selon la revendication 3 ou 4, **caractérisé en ce que**, la matière réduite située dans le réservoir intermédiaire (31) est amenée de manière alternée, à l'aide d'un transport par gravité, depuis le réservoir intermédiaire (31) dans au moins un des deux réservoirs (34, 34a) contenant, en premier lieu, de la pression ambiante, **en ce que** le réservoir intermédiaire (31) est séparé du réservoir rempli (34 ou 34a) au moyen d'une conduite, après le remplissage d'un des deux réservoirs (34 ou 34a), le réservoir rempli (34 ou 34a) étant réglé au moins sur la surpression régnant dans le gazéificateur de fusion (10) et la matière réduite étant amenée depuis le réservoir rempli (34 ou 34a) dans le gazéificateur de fusion (10) sous l'effet de la gravité, et **en ce que** l'autre réservoir (34 ou 34a) est rempli de matière réduite pendant que la matière réduite est amenée dans le gazéificateur de fusion (10).

6. Procédé selon l'une quelconque ou plusieurs des revendications 1 à 5, **caractérisé en ce qu'**une surpression atmosphérique de 3 à 8 bar, de préférence de 3 à 4 bar, est maintenue dans le gazéificateur de fusion (10).

7. Installation pour la fabrication de métal en fusion par l'utilisation d'un procédé selon l'une quelconque ou plusieurs des revendications 1 à 6 avec un gazéificateur de fusion (10) pourvu d'une surpression atmosphérique, avec au moins un réacteur à combustible fluidisé (1 à 3) pourvu d'une surpression atmosphérique, un dispositif de transport (9) entre le réacteur à combustible fluidisé (3) et le gazéificateur de fusion (10) pour le transport de matière réduite depuis le réacteur à combustible fluidisé (3) dans le gazéificateur de fusion (10), et au moins une conduite de raccordement de gaz (17) entre le gazéificateur de fusion (10) et le réacteur à combustible fluidisé (3) pour amener du gaz de réduction formé dans le gazéificateur de fusion (10) dans le réacteur à combustible fluidisé (3), **caractérisée en ce que** le réacteur à combustible fluidisé (3) est disposé à peu près à la même hauteur (N) que le gazéificateur de fusion (10), **en ce que** le dispositif de transport (9) comprend une conduite (29), laquelle dépasse, en partant du réacteur à combustible fluidisé (3), le gazéificateur de fusion (10), que cette conduite (29) débouche dans un réservoir intermédiaire (31) avec un dispositif d'aération (33), et qu'un système de sas (34, 38) pourvu d'un moyen de pressurisation (40) est prévu entre le réservoir intermédiaire (31) et une ouverture de remplissage prévue dans le dôme (30) du gazéificateur de fusion (10), afin d'amener de la matière de réduction.

8. Installation selon la revendication 7, **caractérisée en ce que** le système de sas est formé d'un réservoir (34) et d'un dispositif d'évacuation étanche au gaz (38) entre le réservoir (34) et le gazéificateur de fusion (10).

9. Installation selon la revendication 8, **caractérisée en ce que** le dispositif d'évacuation est formé d'un dispositif d'alimentateur à roue cellulaire.

10. Installation selon l'une quelconque ou plusieurs des revendications 7 à 9, **caractérisée en ce qu'**un organe de fermeture (35) est disposé, au moyen d'une conduite, entre le réservoir intermédiaire (31) et le réservoir (34).

11. Installation selon l'une quelconque ou plusieurs des revendications 8 à 10, **caractérisée en ce qu'**une conduite de gaz (40) débouche dans le réservoir (34) en vue de la production d'une surpression à l'intérieur du réservoir (34), laquelle peut être raccordée à une source de gaz de réduction ou à une source de gaz inerte.

12. Installation selon l'une quelconque ou plusieurs des revendications 8 à 11, **caractérisée en ce qu'**au moins deux réservoirs (34, 34a) sont intercalés parallèlement derrière le réservoir intermédiaire (31), lesquels peuvent être reliés au moyen d'une conduite au réservoir intermédiaire (31), à l'aide de deux conduites de raccordement (35 et 43) respectivement pourvues d'organes de fermeture (36 et 46).

13. Installation selon l'une quelconque ou plusieurs des revendications 7 à 12, **caractérisée en ce que** la conduite (29) est pourvue d'un organe de fermeture (32), de préférence à proximité immédiate du réacteur à combustible fluidisé (3).

14. Installation selon l'une quelconque ou plusieurs des revendications 7 à 13, **caractérisée en ce** deux ou plusieurs réacteur(s) à combustible fluidisé (3) sont disposés à côté du gazéificateur de fusion (10) à la même hauteur (N) que ce dernier, chacun des réacteurs à combustible fluidisé (3) est relié au moyen d'une conduite au gazéificateur de fusion (10) par l'intermédiaire d'un dispositif de transport propre(9).
